## Europäisches Patentamt

## European Patent Office

## Office européen des brevets

(11) Veröffentlichungsnummer: **0 383 351**
**A2**

(12) **EUROPÄISCHE PATENTANMELDUNG**

(21) Anmeldenummer: **90103061.9**

(22) Anmeldetag: **16.02.90**

(30) Priorität: **17.02.89 DE 3904769**

(43) Veröffentlichungstag der Anmeldung:
**22.08.90 Patentblatt 90/34**

(84) Benannte Vertragsstaaten:
**AT BE CH DE DK ES FR GB IT LI LU NL SE**

(51) Int. Cl.⁵: **B60N 2/16**

(71) Anmelder: **NO-SAG FAHRZEUGTECHNIK GmbH & Co. KG**
**Varenseller Strasse 11**
**D-4835 Rietberg 2(DE)**

(72) Erfinder: **Heiringhoff, Heinz**
**Bahnhofstrasse 33**
**D-4835 Rietberg 1(DE)**
Erfinder: **Denzel, Werner**
**Kreuzbreede 2**
**D-4835 Rietberg 2(DE)**

(74) Vertreter: **TER MEER - MÜLLER - STEINMEISTER & PARTNER**
**Artur-Ladebeck-Strasse 51**
**D-4800 Bielefeld 1(DE)**

(54) **Fahrzeugsitz.**

㊵ Ein Fahrzeugsitz mit unterseitiger Sitzschale (10) weist einen Stellmechanismus zur Höhenverstellung des Fahrzeugsitzes auf, der im Inneren der Sitzschale angeordnet ist. Der Stellmechanismus ist in einen den Sitz tragenden Rahmen (12) integriert. An dem Rahmen (12) sind zugleich die Sitzbeschläge angebracht.

Fig. 1

## FAHRZEUGSITZ

Die Erfindung betrifft einen Fahrzeugsitz mit unterseitiger Sitzschale und einem Stellmechanismus zur Höhenverstellung des Fahrzeugsitzes.

Fahrzeugsitze werden vielfach an der Unterseite durch ein schalenförmig gewölbtes Blech abgeschlossen, das zugleich tragendes Element ist und den Sitz optisch und zur Vermeidung von Verletzung an scharfkantigen Teilen der Sitzfederung abschließt. Ferner sind verschiedene Stellmechanismen bekannt, die eine Höhenverstellung eines Sitzes, insbesonderes eines Vordersitzes eines Kraftfahrzeugs ermöglichen. Sofern eine Sitzschale vorgesehen ist, befinden sich diese Stellmechanismen unterhalb der Sitzschale zwischen dieser und der Fahrzeug-Sitzschiene.

Eine aus Blech bestehende, selbsttragende oder mit zusätzlichen tragenden Verstärkungen versehene Sitzschale in Verbindung mit einem Stellmechanismus zur Höhenverstellung ergeben insgesamt ein beträchtliches Gewicht, das bei modernen Fahrzeugkonstruktionen unerwünscht ist. Ferner erfordert eine derartige Konstruktion eine beträchtliche Höhe.

Der Erfindung liegt daher die Aufgabe zugrunde, einen Fahrzeugsitz der eingangs genannten Art derart zu gestalten, daß er ein verringertes Gewicht und eine verringerte Bauhöhe aufweist.

Diese Aufgabe wird erfindungsgemäß über einen Fahrzeugsitz der obigen Art dadurch gelöst, daß der Stellmechanismus im Inneren der Sitzschale angeordnet und in einen tragenden, zugleich die Sitzbeschläge aufnehmenden Rahmen integriert ist.

Alle tragenden und zur Höhenverstellung erforderlichen Teile liegen daher nicht in mehreren Ebenen übereinander, sondern im wesentlichen in einer Ebene. Eine tragende Funktion der Sitzschale ist nicht erforderlich, so daß diese als leichte Kunststoffschale ausgebildet werden kann, durch die in geeigneten Ausnehmungen Stützfüße zur Befestigung des Rahmens an der Fahrzeug-Sitzschiene hindurchgehen. Die Sitzschale kann auch aus Blech bestehen.

Der Stellmechanismus umfaßt vorzugsweise doppelarmige, im Mittelbereich am Rahmen gelagerte Hebel, die an einem Arm mit einem in Längsrichtung des Fahrzeugsitzes beweglichen Stellglied und am anderen Arm mit jeweils einem Stützfuß derart verbunden sind, daß eine Längsverschiebung des Stellgliedes zu einer Anhebung oder Absenkung des Rahmens führt. Vorzugsweise sind vier derartige Doppelhebel in den vier Eckbereichen des Sitzes vorgesehen, die über quer gerichtete Wellen und längs gerichtete Schubstangen in ihrer Bewegung gekoppelt sind.

Der Rahmen besteht vorzugsweise aus zwei seitlichen Wangen, die am rückwärtigen Ende durch einen Bügel verbunden sind. Die Rahmen können kastenförmige, oben offene Profile, insbesondere aus Blech sein, die in ihrem Inneren die wesentlichen Teile des Stellmechanismus, insbesondere die Doppelhebel, das Stellglied und die Schubstange aufnehmen.

Das Stellglied besteht vorzugsweise aus einer Gewindespindel, die in eine Spindelmutter eingreift, die drehbar und kippbar, jedoch in Axialrichtung unverschiebbar in der Wand am vorderen Ende einer der Wangen gelagert ist. Die Spindelmutter ist beispielsweise mit einem Handrad verbunden, das durch eine geeignete Öffnung in der Sitzschale zur Vorderseite des Sitzes austritt.

Weitere Merkmale der Erfindung ergeben sich aus den Unteransprüchen.

Im folgenden wird ein bevorzugtes Ausgangsbeispiel der Erfindung anhand der beigefügten Zeichnung näher erläutert.

Fig. 1 ist ein senkrechter Längsschnitt durch eine erfindungsgemäße Sitzschale mit Rahmen und Höhenverstellung;

Fig. 2 ist eine Draufsicht zu Fig. 1.

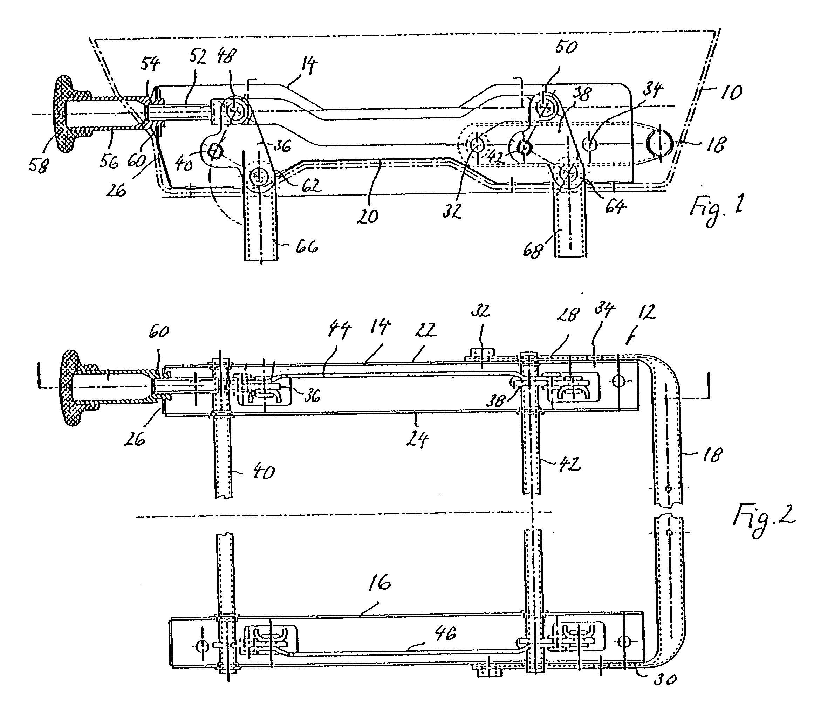

Anschließend soll die Erfindung unter gleichzeitiger Bezugnahme auf Figur 1 und 2 beschrieben werden. In Figur 1 ist strichpunktiert eine Sitzschale 10 angedeutet, die beispielsweise eine leichte Kunststoffschale sein kann. Im Inneren der Sitzschale 10 befindet sich ein insgesamt U-förmiger Rahmen 12, in den zugleich ein Stellmechanismus für die Höhenverstellung des Sitzes integriert ist.

Der Rahmen 12 besteht gemäß Figur 2 im wesentlichen aus zwei seitlichen Wangen 14,16, die am hinteren, rechts in Figur 1 und 2 liegenden Ende durch einen U-förmigen Bügel 18 aus Rohrmaterial miteinander verbunden sind. Die Wangen 14,16 sind oben offene, also im Querschnitt U-förmige Kastenprofile, vorzugsweise aus Blech. Die Kastenprofile weisen einen Boden 20 auf, der im Mittelbereich gemäß Figur 1 entsprechend der Form der Sitzschale 10 anhoben ist, sowie ferner äußere und innere Seitenwände 22,24 und eine vordere Wand 26. Soweit die Wangen 14,16 identisch bzw. spiegelbildlich ausgebildet sind, soll nur die Wange 14 auf der rechten Seite des Sitzes beschrieben werden.

Die beiden abgewinkelten Schenkel des insgesamt U-förmigen Bügels 18, die mit 28,30 bezeichnet sind, sind zusammengedrückt bzw. abgeflacht und mit Hilfe von Bolzen 32,34 mit den äußeren Seitenwänden 22 der Wangen 14,16 verbunden. Diese Bolzen tragen in nicht gezeigter Weise zugleich einen Beschlag für eine neigungsverstellbare Rückenlehne, der somit ebenfalls innerhalb der Sitzschale 10 liegt.

Im Inneren der kastenförmigen Wangen 14,16 liegen die wesentlichen Elemente des Stellmechanismus für die Höhenver stellung. Dieser Stellmechanismus umfaßt vordere und hintere Doppelhebel 36,38, die auf quer zum Sitz verlaufenden drehbaren, vorderen und hinteren Wellen 40,42 drehfest montiert sind. Die Wellen 40,42 sind in nicht bezeichneten, miteinander fluchtenden Bohrungen in beiden Seitenwänden 22,24 der beiden Wangen 14,16 gelagert. Sie werden durch nicht bezeichnete Scheiben, Sprengringe oder dergleichen, in Axialrichtung festgelegt. Die Wellen 40,42 bewirken eine Synchronisation der Schwenkung der Doppelhebel 36,38 in einer senkrechten Ebene.

Die Synchronisation der Schwenkung der vorderen und hinteren Doppelhebel 36,38 erfolgt mit Hilfe von Schubstangen 44,46 die in Längsrichtung innerhalb der Wangen 14,16 verlaufen und am vorderen und hinteren Ende drehbar mit dem jeweils oberen Arm 48,50 der Doppelhebel verbunden sind.

Es ist ersichtlich, daß zur vollständigen Synchronisation der Schwenkbewegung der vier Doppelhebel 36,38 zwei Wellen 40,42 in Verbindung mit einer Schubstange 44 oder 46 oder zwei Schubstangen in Verbindung mit einer Welle ausreichen würden, jedoch ist die dargestellte Ausführung erheblich stabiler.

Mit dem oberen Arm 48 des rechten, vorderen Doppelhebels 36 ist zugleich eine Gewindespindel 52 verbunden, die in Längsrichtung der rechten Wange 14 nach vorne gerichtet ist. Die Gewindespindel 52 ist an dem Arm 48 in einer senkrechten Ebene schwenkbar, jedoch drehfest angebracht. Die Gewindespindel 52 greift in eine Spindelmutter 54 ein, die durch einen Hülsenabschnitt 56 nach vorne verlängert ist, der durch eine nicht bezeichnete Öffnung in der Sitzschale 10 nach vorne austritt und an seinem Ende ein Handrad 58 trägt. Die Spindelmutter 54 weist am rückwärtigen Ende eine umlaufende Nut 60 auf und ist in nicht näher gezeigter Weise drehbar, jedoch axial unbeweglich in der vorde ren Wand 26 der Wange 14 gelagert. Diese Lagerung ist so ausgeführt, daß neben einer Drehbewegung eine leichte Kippbewegung in einer senkrechten Ebene möglich ist.

Wie aus Figur 1 ersichtlich ist, führt bei dieser Konstruktion eine Drehung des Handrades 58 zu einer Längsverschiebung der Gewindespindel 52 in der Spindelmutter 54 und damit zu einer Schwenkung des Doppelhebels 36 um die Achse der Welle 40. Da sich dabei der Anlenkpunkt an dem oberen Arm 48 des Doppelhebels 36 auf einem flachen Bogen bewegt, erfordert die Lagerung der Spindelmutter 54 in der Wand 26 die Möglichkeit einer leichten Schwenkung in einer senkrechten Ebene. Bei einer Schwenkung des Doppelhebels 36 werden die drei übrigen Doppelhebel über die Wellen 40,42 bzw. die Schubstangen 44,46 synchron mitgenommen. Da die Doppelhebel 36 zusammen mit den Wellen 40,42 in den Wangen 14,16 gelagert sind, führt die Schwenkung der Doppelhebel 36,38 andererseits zu einer Anhebung bzw. Absenkung der nicht bezeichneten Anlenkpunkte an den unteren Armen 62,64. Die unteren Arme 62,64 sind über die erwähnten Anlenkpunkte gelenkig mit Stützfüßen 66,68 verbunden, die in nicht gezeigter Weise an der Sitzschiene befestigt sind. Die Stellbewegung des Handrades 58 führt somit zu einer Anhebung und Absenkung des Rahmens 12 und damit des gesamten Sitzes.

Wie aus der Schnittdarstellung der Figur 1 hervorgeht, liegen bei der gezeigten Ausführungsform die Achsen der Wellen 40,42, der oberen Anlenkpunkte auf den Armen 48,50 und der unteren Anlenkpunkte auf den Armen 62,64 in einem Dreiecksverband. Unter Berücksichtigung der beabsichtigten Stellwege läßt sich die geometrische Anordnung der drei Achsen ohne weiteres so auswählen, daß die oberen Anlenkpunkte sich mit möglichst großer Annäherung waagerecht in bezug auf die Wangen bewegen, während die unteren Anlenkpunkte eine weitgehend senkrechte Bewegung durchführen. Daher bleibt die Position des Handrades 58 während des Stellvorganges im wesentlichen unverändert, während der Sitz bei der Höhenverstellung keine nennenswerte Bewegung in Vorwärts- oder Rückwärtsrichtung durchführt.

## Ansprüche

1. Fahrzeugsitz mit unterseitiger Sitzschale und einem Stellmechanismus zur Höhenverstellung des Fahrzeugsitzes, dadurch **gekennzeichnet,** daß der Stellmechanismus im Inneren der Sitzschale (10) angeordnet und in einen tragenden, zugleich die Sitzbeschläge aufnehmenden Rahmen (12) integriert ist.

2. Fahrzeugsitz nach Anspruch 1, dadurch **gekennzeichnet,** daß die Sitzschale (10) aus Kunststoff besteht.

3. Fahrzeugsitz nach Anspruch 1 oder 2, dadurch **gekennzeichnet,** daß die Sitzschale (10) Ausnehmungen für mit dem Rahmen (12) verbundene Stützfüße (66,68) zur Befestigung an der Fahrzeug-Sitzschiene aufweist.

4. Fahrzeugsitz nach einem der Ansprüche 1 bis 3, dadurch **gekennzeichnet,** daß der Stellmechanismus doppelarmige, auf quer zum Sitz verlaufenden Wellen (40,42) im Rahmen (12) gelagerte Doppelhebel (36,38) umfaßt, die einerseits mit einem in Längsrichtung des Sitzes beweglichen Stellglied (52) und andererseits mit Stützfüßen (66,68) des Sitzes verbunden sind und die Bewegung des Stellgliedes in eine Hubbewegung des Rahmens (12) umsetzen.

5. Fahrzeugsitz nach einem der vorhergehenden Ansprüche, dadurch **gekennzeichnet, daß** der Rahmen (12) zwei seitliche Wangen (14,16) und einen diese am rückwärtigen Ende verbindenden Bügel (18) umfaßt.

6. Fahrzeugsitz nach Anspruch 5, dadurch **gekennzeichnet, daß** wenigstens je ein Doppelhebel (36,38) in jeder der Wangen (14,16) gelagert ist und daß die Doppelhebel paarweise durch eine die Wangen verbindende Welle (40,42) drehfest verbunden sind.

7. Fahrzeugsitz nach Anspruch 6, dadurch **gekennzeichnet, daß** insgesamt vier Doppelhebel (36,38) und zwei diese paarweise verbindende Wellen (40,42) vorgesehen sind und daß auf wenigstens einer Seite jeweils ein Arm (48,50) der Doppelhebel durch eine Schubstange (44,46) mit dem entsprechenden Arm des anderen Doppelhebels verbunden ist.

8. Fahrzeugsitz nach einem der Ansprüche 1 bis 7, dadurch **gekennzeichnet, daß** die Wangen (14,16) aus einem oben offenen, am vorderen Ende geschlossenen, kastenförmigen U-Profil, insbesondere aus Blech bestehen und daß die Elemente des Stellmechanismus innerhalb der U-Profile angeordnet sind.

9. Fahrzeugsitz nach einem der Ansprüche 5 bis 8, dadurch **gekennzeichnet, daß** das Stellglied (52) eine Gewindespindel ist, die in eine in einer vorderen Wand (26) einer der Wangen (14) dreh- und schwenkbar gelagerte Spindelmutter (54) eingreift, die durch eine Öffnung in der Sitzschale (10) mit einem Handrad (58) an der Vorderseite des Sitzes verbunden ist.

10. Fahrzeugsitz nach einem der vorhergehenden Ansprüche, dadurch **gekennzeichnet, daß** an dem Rahmen innerhalb der Sitzschale (10) Schwenkbeschläge für eine neigungsverstellbare Rückenlehne angebracht sind.

54  52  48  14  50  38  34  10
58  56  60  40  36  42  18
26  62  20  32  64
66  68

Fig. 1

60  44  14  22  32  28  34  12
26  36  38  24  42  18
40

16  46  30

Fig. 2

EP 0 383 351 A2